# FASCICULE DE BREVET EUROPEEN

(11) **EP 1 901 878 B1**
(45) Date de publication et mention de la délivrance du brevet: **21.09.2011**
(21) Numéro de dépôt: 06764654.7
(22) Date de dépôt: 22.05.2006
(51) Int. Cl.: B23K 37/053, B23K 9/028, B23K 9/16, B23K 9/32

(54) **DISPOSITIF POUR LE CENTRAGE ET LE SERRAGE DE PIECES TUBULAIRES AVEC MOYENS DE REGULATION DU DEBIT DE GAZ POUR CONTROLLER LA TENEUR EN OXYGENE**
VORRICHTUNG ZENTRIEREN UND FESTKLEMMEN VON RÖHRENFÖRMIGEN TEILEN MIT MITTELN ZUR REGULIERUNG DES GASDURCHFLUSSES ZUR STEUERUNG DES SAUERSTOFFGEHALTS
DEVICE FOR CENTERING AND CLAMPING TUBULAR PARTS, COMPRISING MEANS FOR REGULATING THE GAS FLOW RATE IN ORDER TO CONTROL THE OXYGEN CONTENT

(30) Priorité: 20.05.2005 FR 0505079
(43) Date de publication de la demande: 26.03.2008
(73) Titulaire: Serimax, 77290 Mitry-Mory (FR)
(72) Inventeur: RICHARD, Gilles, F-60330 Silly le Long (FR); L'ARVOR, Eric, F-02600 Villers-Cotterets (FR)
(74) Mandataire: Fosse, Danièle
(86) Numéro de dépôt international: PCT/FR2006/001158
(87) Numéro de publication internationale: WO 2006/123069

(56) Documents cités:
- EP-A- 1 207 003
- WO-A-96/11765
- GB-A- 2 355 425
- US-A- 4 541 055
- US-A- 5 425 492
- US-A- 5 435 479

## Description

La présente invention concerne un dispositif pour le centrage et le serrage de pièces tubulaires telles que des conduits en acier allié conformément au preambule de la revendication 1 (voir, par exemple EP 1 207 003).

Lors de la construction d'une canalisation de type pipeline, on met en place le bout d'un conduit à l'extrémité de la canalisation en construction pour les souder ensemble. Il est donc possible de réaliser une canalisation de la longueur souhaitée par simple ajout de conduits. Le dispositif de soudage extérieur est généralement agencé pour se déplacer le long de la canalisation ainsi construite et réaliser les soudures au fur et à mesure des besoins tandis qu'un dispositif interne à la canalisation est déplaçable également à l'intérieur de celle-ci.

Ce dispositif interne permet lors de la mise en place d'un nouveau conduit à souder, de faire parfaitement coïncider l'axe de ce conduit avec celui de la canalisation en construction et donc d'aligner avec précision les extrémités respectives du conduit et de la canalisation en vue du soudage ainsi que de les maintenir dans cet alignement le temps de l'opération de soudage. Un dispositif de centrage et de serrage de ce type est communément appelé "clamp " et est notamment décrit dans EP 0 249 079, EP 1 123 774 ou encore EP 0 767 719.

Le dispositif de soudage qui se trouve positionné à l'extérieur des conduits en acier inoxydable ou en acier allié, dépose donc la ou les passes de soudage par l'extérieur. Lors de la première passe, appelée passe de pénétration, il est important que le bain de fusion ne rentre pas en contact avec un gaz actif, c'est-à-dire non inerte, tel que l'air ou l'oxygène, de manière à éviter qu'une oxydation ne survienne lorsqu'ils sont chauffés aux températures de soudage. En effet, si le soudage est effectué dans une atmosphère renfermant de l'oxygène, la canalisation réalisée est alors beaucoup plus rapidement sensible à la corrosion. Aussi, de manière à protéger le bain de fusion, le dispositif de soudage extérieur comporte des moyens permettant de générer une protection gazeuse en amenant, au droit de la soudure, du gaz inerte pour protéger ledit bain de fusion.

Toutefois, on a pu remarquer que cette protection extérieure reste insuffisante. En effet, lors de la passe de pénétration, le bain de fusion sur l'envers de la soudure entre en contact avec une atmosphère non exempte d'oxygène. On a donc proposé dans EP 0 193 812, un dispositif de centrage et de serrage interne pourvu de moyens créant une chambre étanche au niveau du joint entre les deux conduits et purgeant l'oxygène renfermé dans cette chambre en y introduisant un gaz inerte tel que de l'argon pour créer une atmosphère inerte au niveau de la soudure. De manière à maintenir cette atmosphère de protection tout au long de l'opération de soudage, le flux d'argon est maintenu de manière continue dans la chambre étanche. Un tel dispositif permet donc de générer une atmosphère exempte d'oxygène au niveau de l'envers de la soudure. On connaît également un dispositif de même type par EP 1 207 003.

On connaît aussi des dispositifs pourvus de moyens de mesure de la teneur en oxygène pour pouvoir déterminer la présence d'une atmosphère de protection suffisante pour autoriser le début d'un cycle de soudage.

Ainsi, on a proposé dans le document GB 2 355 425 un dispositif de centrage et de serrage dans lequel - peuvent être prévus un conduit flexible et une connexion associée à travers lesquels est amené un gaz de purge de l'oxygène, la source de gaz comprenant des valves pour réguler le flux de gaz de purge. Un capteur approprié pour mesurer le rapport gaz/oxygène est adapté sur le clamp ou à l'extérieur au niveau de l'orifice d'évacuation de l'oxygène/gaz. Ce capteur permet un contrôle continu du rapport et envoie les données à une station de contrôle appropriée, lorsque la valeur du rapport est appropriée le soudage peut commencer. La mesure du rapport gaz/oxygène est continue de manière à vérifier que ce rapport présente une valeur appropriée tout au long du soudage sans qu'il soit proposé de moduler le débit de gaz au cours du soudage en fonction de cette mesure.

Dans WO 96/111765, on propose un dispositif utilisé pour le soudage bout à bout de conduits comportant des moyens formant barrière pour fermer une partie de l'espace interne du conduit et des moyens d'émission d'un gaz de protection constitués de buses radiales qui distribuent le gaz sous forme laminaire ou quasi laminaire passant au niveau du plan de soudage. Des moyens de mesure de la teneur en oxygène du gaz sont agencés sous forme d'une aiguille dont la pointe est située en aval du plan de soudage, de sorte que le gaz s'écoulant au niveau du plan de soudage aura toujours une teneur en oxygène inférieure à celle du gaz aspiré à cette pointe. La mesure effectuée sert à déterminer uniquement le début du soudage.

Dans le document US 4 541 055, on a proposé un dispositif d'usinage au laser de pièces et notamment un appareil de commande informatique dudit usinage, dans lequel une chambre d'usinage reçoit la pièce à usiner ainsi qu'un gaz non réactif dont le débit d'entrée est contrôlé et maintenu constant. On effectue des contrôles à partir de la mesure de la teneur en oxygène et en eau dans la chambre. Mais ces mesures n'induisent pas une régulation du débit ou de la pression du gaz de purge mais servent à déclencher ou arrêter le soudage en fonction de la teneur. Ainsi, on commande le débit du gaz de purge en fonction de la phase de soudage en cours et l'échantillonnage de l'oxygène est interrompu de façon automatique pendant le soudage.

Cependant, les dispositifs de ce type présentent au moins deux inconvénients majeurs en ce que :
- il nécessite une consommation très élevée de gaz inerte, le flux de gaz inerte étant continu pendant toute l'opération de soudage pour garantir cette atmosphère de protection. Cette consommation présente non seulement un coût élevé mais nécessite également des réserves en gaz inerte suffisantes, pouvant générer des problèmes d'approvisionnement et d'encombrement du dispositif, et
- au fur et à mesure que la passe de pénétration est soudée, la chambre d'inertage est de plus en plus étanche, et le débit continu de gaz inerte va créer une surpression dans la dite chambre, surpression qui peut engendrer des imperfections au niveau du profil de la passe de pénétration tel par exemple qu'un profil concave ce qui peut être cause de rejet en fonction de la longueur et de la profondeur du profil concave.

On connaît également par US-A-5 435 479 un dispositif de serrage et de centrage de type qui permet de maintenir ensemble deux conduits à souder pendant une opération de soudage effectuée sous atmosphère inerte. Le gaz inerte est distribué à travers un manifold de manière égale au niveau de chaque moyen de serrage, la pression du gaz étant contrôlée de manière précise pour garantir la meilleure qualité de soudage, la pression devant être maintenue suffisamment haute pour éviter une contamination par l'oxygène de l'atmosphère (oxydation de la soudure) et suffisamment basse pour éviter un déplacement du métal de soudage fondu. Cette pression est mesurée dans le manifold par un capteur de pression, le contrôleur du débit lit les mesures et régule en conséquence le débit pour maintenir une pression constante dans le manifold. Toutefois, la pression étant mesurée au niveau du manifold, on n'obtient pas une mesure directe de la pression en gaz inerte au niveau du plan de joint, de sorte qu'on risque de se retrouver avec une surpression au niveau du plan de joint alors que c'est la pression au sein du manifold qui est mesurée et sert de référence à la régulation du débit de gaz.

Dans le document US 5 425 492, on propose un dispositif de purge avec lequel on introduit un gaz de purge au niveau d'un soudage à réaliser pour évacuer notamment les gaz réactifs dans un espace intérieur défini au niveau du soudage. De manière à maintenir un flux de gaz de purge efficace, on mesure la pression dans l'espace interne et les valeurs mesurées sont amenées vers un contrôleur qui ajuste de manière incrémentielle la décharge du gaz dans l'espace intérieur. Cependant, l'espace intérieur au niveau du plan de joint est très vaste et l'émission du gaz de purge n'intervient pas au droit du plan de joint mais aux extrémités de cet espace intérieur de sorte que le flux de gaz de purge soit laminaire et s'étendent le long des parois de l'espace interne jusqu'au soudage. Par conséquent, la consommation en gaz de purge reste malgré la régulation proposée très importante pour pouvoir maintenir une atmosphère de protection efficace. Par ailleurs, la mesure de la pression étant effectuée aux extrémités de l'espace ainsi défini et à proximité des moyens d'émission du gaz de purge, on peut également supposer qu'elle ne reflète pas la pression du niveau du plan de joint ce qui ne peut conduire à une régulation efficace en temps réel.

Afin de pallier ces inconvénients, la présente invention propose un dispositif de centrage et de serrage permettant de générer une atmosphère de protection de la soudure à l'intérieur des conduits à souder mais qui permet également de contrôler et réguler ladite atmosphère protectrice.

Ainsi, la présente invention a pour objet un dispositif de centrage et de serrage de conduits, de préférence en acier allié tel que défini dans la revendication 1.

Ainsi, de manière avantageuse, le dispositif permet de définir et maintenir des conditions de soudage optimales (atmosphère exempte d'O₂) en régulant le débit et/ou la pression du gaz inerte distribué par rapport à l'une ou l'autre de la teneur en O₂ de l'atmosphère de protection et de la pression régnant dans ladite atmosphère de protection dans la chambre d'inertage au niveau du plan de joint ou en les associant toutes les deux.

Cette protection gazeuse envers permet d'obtenir une qualité de passe de pénétration optimale et ce, quel que soit le procédé de soudage utilisé tel que à l'arc à électrode fusible MIG/MAG, à l'arc à électrode réfractaire, etc., en régulant le débit de gaz inerte (tel que de l'Argon) et/ou la pression d'alimentation en gaz inerte de manière à maintenir la teneur en O₂ et/ou la pression de ladite atmosphère de protection au-dessous des valeurs de seuil d'alarme prédéterminées de manière à garantir de bonnes conditions pour le soudage sans pour autant nécessiter la distribution de manière continue du gaz inerte. Le dispositif est donc avantageusement économique tout en contribuant à améliorer le profil de la passe de pénétration.

De préférence, on choisit une valeur du seuil d'alarme de teneur en O₂ de 5000 ppm et une valeur du seuil d'alarme de pression de 12 millibars.

Le dispositif comporte de manière avantageuse des moyens de mesure en temps réel de cette teneur en O₂ au sein de l'atmosphère de protection, par exemple confinée à l'intérieur de la chambre d'inertage et des moyens de traitement, de préférence en temps réel, des mesures de la teneur en O₂, le traitement desdites informations (mesures) permettant de déterminer en temps réel les instructions de commande des moyens de régulation du débit et/ou de la pression d'alimentation du gaz inerte pour maintenir la teneur en O₂ au-dessous du seuil d'alarme prédéterminé si nécessaire.

Le dispositif peut également comporter des moyens de mesure en temps réel de la pression tel qu'un capteur de pression permettant de mesurer la pression à l'intérieur de l'atmosphère de protection ou de la chambre d'inertage et des moyens de traitement, de préférence en temps réel, des mesures de la pression, le traitement desdites informations (mesures) permettant de déterminer en temps réel les instructions de commande des moyens de régulation du débit et/ou de la pression d'alimentation du gaz inerte pour maintenir la pression au-dessous du seuil d'alarme prédéterminé, le cas échéant.

Les données mesurées pour la pression et/ou la teneur en O₂ sont donc avantageusement enregistrées et traitées en temps réel de manière à réguler en temps réel la pression d'alimentation et/ou le débit du gaz inerte au cours d'un cycle de soudage de manière à maintenir les conditions optimales pour ce soudage. Les données peuvent également être transférées vers une unité de commande et de contrôle à l'extérieur de la canalisation en formation par des moyens de transmission du type filaires, infrarouge, radio ou tout autre moyen(s) approprié(s).

A la valeur de seuil d'alarme prédéterminée au-dessous de laquelle doit être la teneur en O₂ et/ou la pression, on peut ajouter une valeur de seuil de début de cycle, inférieure à la valeur de seuil d'alarme de sorte que le cycle de soudage ne commence que pour une teneur en O₂ et/ou une pression inférieure à cette valeur de seuil de début de cycle. De même, on peut prévoir une valeur de seuil de sécurité, supérieure à la valeur de seuil d'alarme qui, si elle est atteinte, entraîne la commande de moyens d'arrêt automatique du soudage en vue de l'arrêt total du cycle de soudage.

Ainsi de préférence, lorsque les moyens de mesure de la pression et/ou de la teneur en O₂ détectent des valeurs de pression et/ou de teneur en O₂ inférieures aux valeurs de seuil d'alarme prédéterminées et de préférence inférieures aux valeurs de seuil de début de cycle, des moyens de commande du soudage à l'èxtérieur sont activés et le cycle de soudage est déclenché. Ce cycle de soudage se déroule ensuite tant que les valeurs de pression et/ou de teneur en O₂ mesurées restent inférieures aux valeurs de seuil d'alarme.

Si lors du soudage, les moyens de régulation du débit et/ou de la pression d'alimentation du gaz inerte ne permettent pas de maintenir des valeurs de pression et/ou de teneur en O₂ inférieures aux valeurs de seuil d'alarme et si la durée de dépassement du seuil d'alarme est inférieure à un temps prédéterminé, on peut prévoir des moyens d'émission d'un message d'anomalies vers l'unité de commande et de contrôle de la station de soudage extérieur. Si la durée de dépassement, du seuil d'alarme dépasse le temps prédéterminé, alors des moyens d'arrêt automatique du soudage sont activés et le cycle de soudage peut être arrêté automatiquement.

L'envoi des instructions vers les moyens de régulation peut être réalisé par liaison électrique filaire, par radio transmission, par infrarouge ou tout autre moyen de transmission approprié.

De préférence les moyens de traitement comportent au moins des moyens d'enregistrement de la valeur de seuil d'alarme, de la valeur de seuil de début de cycle et de la valeur de seuil de sécurité ainsi que des moyens de comparaisons des mesures effectuées avec lesdites valeurs enregistrées. Les valeurs de seuil peuvent donc être choisies par l'utilisateur et programmées en fonction du milieu et des conditions d'opération.

Les moyens de cloisonnement étanche définissant la chambre d'inertage sont de préférence constitués de joints tels que des joints gonflables, des joints à lèvres ou autre, ou bien de bouées gonflables. Cette chambre d'inertage permet avantageusement de réduire le volume de gaz inerte à diffuser pour obtenir la protection gazeuse recherchée d'une part et de réduire la durée pour atteindre cette teneur et/ou pression prédéfinie, encore appelée durée d'inertage d'autre part.

Des moyens de mesure de la température peuvent être prévus dans la chambre d'inertage, notamment pour mesurer la température ambiante dans laquelle les capteurs de teneur en O₂ et de pression travaillent et pour vérifier que cette température est compatible avec la plage d'utilisation de ces capteurs.

Conformément à l'invention, les moyens de distribution du gaz inerte sont agencés sur le dispositif de sorte que cette distribution intervienne directement à l'envers du plan de joint, à une distance radiale par rapport à la peau intérieure des extrémités à souder d'au maximum 30 mm, les moyens de distribution étant du type tuyau/serpentin pourvu d'une pluralité de perçages ou d'orifices d'évacuation ou du type plaque métallique poreuse (acier poral) permettant de diffuser le gaz inerte de façon homogène en direction du plan de joint.

Lors de l'utilisation du dispositif selon l'invention, on doit s'assurer que le gaz analysé par les moyens de mesure de la teneur en O₂ est représentatif du gaz contenu dans la chambre d'inertage. A cet effet, le dispositif comporte des moyens tels qu'une pompe auxiliaire permettant de créer une dépression contrôlée en aval des moyens de mesure de la teneur en O₂, ce qui permet de garantir qu'un débit minimum de gaz contenu dans la chambre d'inertage, débit prédéfini et programmable, traverse lesdits moyens de mesure.

De préférence, on prévoit également un système de délestage du gaz contenu dans la chambre d'inertage, ce système devant être contrôlé automatiquement par la mesure de la pression et/ou de la teneur en O₂, de façon à conserver la pression et/ou la teneur en O₂ inférieures aux seuils d'alarme ou de sécurité requis, ce système de délestage contrôlé et piloté pouvant comprendre un clapet, une électrovanne ou pouvant être assuré par une augmentation du débit de la pompe auxiliaire. On peut ainsi rétablir rapidement la pression ou teneur en O₂ au sein de la chambre d'inertage pour revenir à des conditions idéales de soudage.

De préférence, le gaz inerte n'est pas diffusé dans la chambre d'inertage de façon continue jusqu'à atteindre un seuil maximal prédéfini de pression ou de teneur en O₂, mais le débit de gaz inerte est dans un premier temps réglé à une valeur maximale prédéterminée puis est abaissé au fur et à mesure de la baisse de la teneur en O₂ mesurée dans la chambre jusqu'à une faible valeur de l'ordre de quelques litres/minutes et jusqu'à atteindre le niveau en pression et/ou en teneur de O₂ souhaité pour démarrer un cycle de soudage.

Selon une variante du dispositif selon l'invention, ce dernier est équipé de moyens de vérification du calibrage des moyens de mesure de la teneur en O₂, comprenant une alimentation en gaz inerte additionnelle, le gaz inerte de cette seconde alimentation étant calibré en oxygène par exemple à 5000 ppm et de préférence renfermé dans une bouteille extérieure au dispositif et amené à celui-ci par une conduite reliée directement aux moyens de mesure de la teneur en O₂, et des moyens permettant de basculer d'une alimentation à l'autre de sorte que, lorsque le gaz inerte calibré en O₂ passe pendant un temps très court au niveau des moyens de mesure, on peut vérifier le calibrage des moyens de mesure.

Un dispositif selon l'invention est utilisable dans n'importe quelle position des conduits à souder, conduits à l'horizontale pour le soudage à terre ou en mer avec une pose en faible profondeur d'eau ou à la verticale lors du soudage en mer à grande profondeur d'eau.

Le dispositif selon l'invention peut également comporter une latte support envers maintenant le bain de fusion lors de la réalisation de la phase de pénétration, cette latte pouvant être réalisée en matériaux du type céramique, métallique tel que le cuivre ou un alliage de cuivre.

L'invention a également trait à un procédé de mise en oeuvre du dispositif selon l'une des revendications 1 à 13, voir revendication 14.

On décrira maintenant l'invention plus détail en référence au dessin dans lequel :
la figure 1 est un diagramme représentant la variation du débit du gaz d'inertage et de la teneur en O₂ au cours d'un cycle de soudage, et
la figure 2 représente de manière schématique le fonctionnement du dispositif selon l'invention.

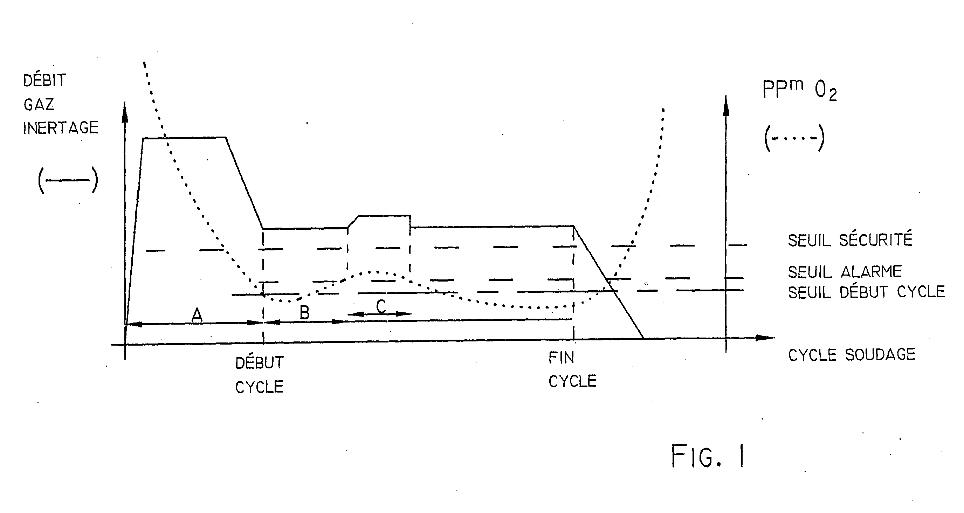

Comme on peut le voir à la figure 1, à la valeur de seuil d'alarme prédéterminée au-dessous de laquelle doit être la teneur en O₂, on ajoute une valeur de seuil de début de cycle, de sorte que le cycle de soudage ne commence que pour une teneur en O₂ inférieure à cette valeur de seuil de début de cycle.

Ainsi pendant l'intervalle de temps A précédant le début du cycle de soudage, on distribue le gaz inerte tel que de l'Argon au niveau du plan de joint de manière à faire baisser rapidement la teneur en O₂ jusqu'au-dessous de la valeur de seuil du début de cycle en jouant sur le débit d'Argon.

De cette façon, on garantit que le soudage commence lorsque le plan de joint se trouve bien dans une atmosphère de protection suffisante pour garantir des conditions optimales de soudage.

Le soudage est alors démarré. Pendant l'intervalle de temps B, le débit d'Argon est maintenu constant et la teneur en O₂ dépasse à un moment donné le seuil d'alarme. Les moyens de régulation du débit de d'Argon sont alors commandés en temps réel pour rétablir la teneur en O₂ inférieure à cette valeur de seuil d'alarme en augmentant ledit débit, pendant l'intervalle C.

On peut prévoir une valeur de seuil de sécurité, supérieure à la valeur de seuil d'alarme et qui, si elle est dépassée, entraîne l'arrêt total du cycle de soudage jusqu'au rétablissement de conditions idéales de soudage.

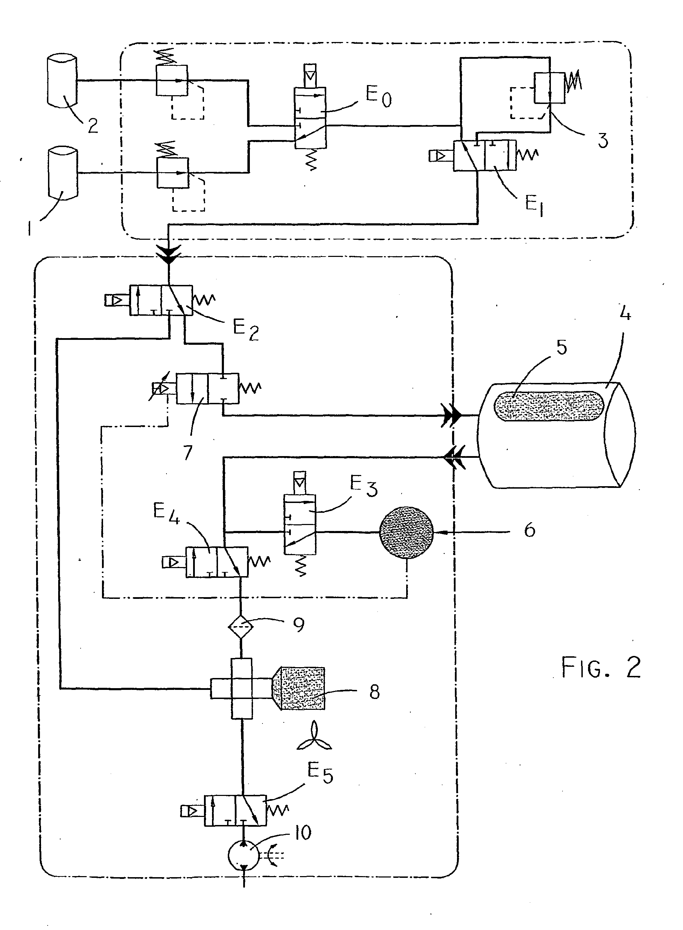

Comme on peut le voir schématiquement à la figure 2, le dispositif comporte des moyens de distribution d'un gaz inerte comprenant une réserve 1 de gaz inerte ainsi qu'une réserve de gaz étalon 2. Une première électrovanne E0 permet de sélectionner l'une ou l'autre des réserves. A la figure 2, on a choisi la distribution de gaz inerte pour créer une atmosphère de protection au niveau du plan de joint.

On prévoit ensuite des moyens 3 de régulation de la pression. Sur le schéma représenté une deuxième électrovanne E1 guide le gaz inerte directement vers une troisième électrovanne E2 qui amène le gaz vers la chambre d'inertage 4 créée au niveau du plan de joint. Un capteur de température 5 est prévu dans cette chambre 4.

Le gaz est guidé également vers un capteur de pression 6 permettant de mesurer la pression régnant dans ladite chambre 4, ce capteur 6 étant associé à un régulateur de pression 7 positionné en aval de l'électrovanne E2. Ainsi, une mesure de la pression détectée supérieure à la valeur de seuil d'alarme commande la régulation de pression 7. Une électrovanne E3 permet d'utiliser ou non ce capteur de pression 6.

Par l'intermédiaire d'une électrovanne E4, le gaz est guidé vers une cellule 8 de mesure de la teneur en O₂. Un filtre 9 peut être positionné avant la cellule 8. Lorsque la cellule 8 détecte une teneur en O₂ supérieure au seuil de d'alarme prédéterminé, on commande en retour le régulateur de pression (lequel ?).

La cellule 8 est également liée à une pompe auxiliaire 9 par l'intermédiaire d'une électrovanne E5.

Cette pompe auxiliaire 9 permet de vérifier que le gaz analysé par la cellule 8 est bien représentatif du gaz contenu dans la chambre 4, la pompe 9 permettant de créer une dépression contrôlée en aval de la cellule 8 pour garantir un débit minimum.

L'invention n'est bien entendu pas limitée au mode de réalisation donné décrit ci-dessus, mais en couvre au contraire toutes les variantes, en particulier quant au choix des valeurs de seuil d'alarme qui sont déterminées en fonction des conditions de soudage et de l'environnement dans lequel survient le soudage.

## Revendications

1. Dispositif de centrage et de serrage de conduits, de préférence en acier allié, mis bout à bout pour être soudés et pour former une canalisation du type pipeline, présentant notamment des moyens de centrage et de serrage de deux conduits à souder, éventuellement des moyens de cloisonnement étanche définissant une chambre dite d'inertage au niveau du plan de joint et des moyens de distribution d'un gaz inerte pour créer une atmosphère de protection au niveau du plan de joint,
**caractérisé en ce que** les moyens de distribution du gaz inerte sont agencés sur le dispositif de sorte que cette distribution intervienne directement à l'envers du plan de joint, à une distance radiale par rapport à la peau intérieure des extrémités à souder d'au maximum 30 mm les moyens de distribution étant du type tuyau/serpentin pourvu d'une pluralité de perçages ou d'orifices d'évacuation permettant de diffuser le gaz inerte de façon homogène en direction du plan de joint, et **en ce qu'**il comporte en outre au moins des moyens de régulation du débit de gaz inerte et/ou de la pression d'alimentation de ce gaz inerte, en fonction de la teneur en O₂ mesurée dans ladite atmosphère protectrice et/ou de la pression mesurée au sein de ladite atmosphère au niveau du plan de joint, de manière à maintenir la tenseur en O₂ de ladite atmosphère inférieure à une valeur de seuil d'alarme prédéterminée et/ou la pression de ladite atmosphère inférieure à une valeur de seuil d'alarme prédéterminée.

2. Dispositif selon la revendication 1, **caractérisé en ce qu'**il comporte des moyens de mesure en temps réel de la teneur en O₂ au sein de l'atmosphère de protection et des moyens de traitement en temps réel des mesures de la teneur en O₂, le traitement desdites informations (mesures) permettant de déterminer en temps réel les instructions de commande des moyens de régulation du débit et/ou de la pression d'alimentation du gaz inerte pour maintenir la teneur en O₂ au-dessous du seuil d'alarme prédéterminé.

3. Dispositif selon l'une des revendications 1 et 2, **caractérisé en ce que** la valeur du seuil d'alarme de la teneur en O₂ est de préférence 5000 ppm.

4. Dispositif selon l'une des revendications 1 à 3, **caractérisé en ce qu'**il comporte des moyens de mesure en temps réel de la pression tel qu'un capteur de pression permettant de mesurer la pression à l'intérieur de l'atmosphère de protection et des moyens de traitement en temps réel des mesures de la pression, le traitement desdites informations (mesures) permettant de déterminer en temps réel les instructions de commande des moyens de régulation du débit et/ou de la pression d'alimentation du gaz inerte pour maintenir la pression au-dessous du seuil d'alarme prédéterminé.

5. Dispositif selon l'une des revendications 1 à 4, **caractérisé en ce que** la valeur de seuil d'alarme de la pression est de préférence 12 millibars.

6. Dispositif selon l'une des revendications 1 à 5, **caractérisé en ce qu'**il comporte des moyens de commande du soudage activés lorsque la teneur en O₂ et/ou la pression sont inférieures à des valeurs de seuil de début de cycle prédéterminées.

7. Dispositif selon l'une des revendications 1 à 6, **caractérisé en ce qu'**il comporte des moyens d'émission d'un message d'anomalies vers l'unité de commande et de contrôle de la station de soudage extérieur, lorsque la teneur en O₂ et/ou la pression sont supérieures aux valeurs de seuil d'alarme prédéterminées et lorsque la durée de dépassement du seuil d'alarme est inférieure à un temps prédéterminé.

8. Dispositif selon la revendication 7, **caractérisé en ce qu'**il comporte des moyens d'arrêt automatique du soudage activés si la durée du dépassement du seuil d'alarme dépasse le temps prédéterminé.

9. Dispositif selon l'une des revendications 1 à 8, **caractérisé en ce qu'**il comporte des moyens d'arrêt automatique du soudage activés lorsque la teneur en O₂ et/ou la pression sont supérieures aux valeurs de seul de sécurité prédéterminées, supérieures aux valeurs de seuil d'alarme.

10. Dispositif selon l'une des revendications 1 à 9, **caractérisé en ce que** des moyens de mesure de la température sont prévus dans la chambre d'inertage.

11. Dispositif selon l'une des revendications 1 à 10, **caractérisé en ce qu'**il comporte des moyens tels qu'une pompe permettant de créer une dépression contrôlée en aval des moyens de mesure de la teneur en O₂, ce qui permet de garantir qu'un débit minimum de gaz contenu dans la chambre d'inertage, débit prédéfini et programmable, traverse lesdits moyens de mesure,

12. Dispositif selon l'une des revendications 1 à 11, **caractérisé en ce qu'**il est équipé de moyens de vérification du calibrage des moyens de mesure de la teneur en O₂, comprenant une alimentation en gaz inerte additionnelle, le gaz inerte de cette seconde alimentation étant calibré en oxygène par exemple à 5000 ppm et de préférence renfermé dans une bouteille extérieure au dispositif et amené à celui-ci par une conduite reliée directement aux moyens de mesure de la teneur en O₂ et des moyens permettant de basculer d'une alimentation à l'autre de sorte que, lorsque le gaz inerte calibré en O₂ passe pendant un temps très court au niveau des moyens de mesure, on peut vérifier la calibrage des moyens de mesure.

13. Dispositif selon l'une des revendications 1 à 12, **caractérisé en ce qu'**il comporte en outre un système de délestage du gaz contenu dans la chambre d'inertage est mis en place, ce système étant contrôlé automatiquement par la mesure de la pression et/ou de la teneur en O₂, de façon à conserver la pression et/ou la teneur en O₂ inférieures aux seuils requis, ce système de délestage contrôlé et piloté comprenant un clapet, une électrovanne ou pouvant être assuré par une augmentation du débit de la pompe auxiliaire.

14. Procédé de mise en oeuvre d'un dispositif selon l'une des revendications précédentes, dans lequel une fois que ledit dispositif introduit à l'intérieur de deux conduits à soude, a centré et serré lesdites conduits, on distribue un gaz inerte au niveau du plan de joint entre ceux-ci de manière à créer une atmosphère de protection au niveau de l'envers du plan de joint, **caractérisé en ce qu'**on mesure en temps réel au sein de l'atmosphère de protection la teneur en O₂. et/ou la pression y régnant, on compare lesdites mesures effectuées par rapport à une valeur de seuil de teneur en O₂ et/ou de pression prédéterminée, et on régule ensuite en temps réel le débit et/ou la pression d'alimentation du gaz inerte à envoyer de manière à maintenir la teneur en O₂ et/ou la pression au-dessous du seuil d'alarme prédéterminé.

## Claims

1. Device for centring and clamping conduits which are preferably made from alloy steel and which are positioned end to end in order to be welded to form a pipeline, having in particular means for centring and clamping two conduits that are to be welded, optional leak-tight partition means which define an inerting chamber at the mating surface and inert gas distribution means for creating a protective atmosphere at the mating surface,
**characterised in that** the means for distributing the inert gas are arranged on the device in such a way that this distribution occurs directly on the other side of the mating surface, at a radial distance in relation to the interior skin of the ends to be welded by a maximum of 30 mm, the means for distributing being of the pipe/coil type provided with a plurality of piercings or orifices for removal making it possible to distribute the inert gas homogeneously in the direction of the mating surface, and **in that** it further comprises at least means for regulating the flow of inert gas and/or the supply pressure of this inert gas, according to the O₂ content measured in said protective atmosphere and/or of the pressure measured in said atmosphere on the mating surface, in such a way as to maintain the O₂ content of said atmosphere lower than a predetermined alarm threshold value and/or the pressure of said atmosphere lower than a predetermined alarm threshold value.

2. Device according to claim 1, **characterised in that** it comprises means for measuring in real time the O₂ content in the protective atmosphere and means for treating in real time measurements of the O₂ content, the treatment of said information (measurements) making it possible to determine in real time the instructions for controlling the means for regulating the flow and/or the supply pressure of the inert gas in order to maintain the O₂ content below a predetermined alarm threshold.

3. Device according to one of claims 1 and 2, **characterised in that** the alarm threshold value for the O₂ content is more preferably 5,000 ppm.

4. Device according to one of claims 1 to 3, **characterised in that** it further comprises means for measuring pressure in real time such as a pressure sensor making it possible to measure the pressure inside the protective atmosphere and means for treating pressure measurements in real time, the treatment of said information (measurements) making it possible to determine in real time the instructions for controlling the means for regulating the flow and/or the supply pressure of the inert gas in order to maintain the pressure below a predetermined alarm threshold.

5. Device according to one claims 1 to 4, **characterised in that** the alarm threshold value of the pressure is more preferably 12 millibars.

6. Device according to one of claims 1 to 5, **characterised in that** it comprises means for controlling welding activated when the O₂ content and/or the pressure are lower than predetermined cycle start threshold values.

7. Device according to one of claims 1 to 6, **characterised in that** it comprises means for emitting a message of anomalies to the control unit of the exterior welding station when the O₂ content and/or the pressure are above the alarm threshold values and when the duration of the exceeding of the alarm threshold is less than a predetermined time.

8. Device according to claim 7, **characterised in that** it comprises means for automatically stopping welding, activated if the duration of the exceeding of the alarm threshold exceeds the predetermined time.

9. Device according to one of claims 1 to 8, **characterised in that** it comprises means for automatically stopping welding, activated when the O₂ content and/or the pressure are higher than the predetermined safety threshold values, higher than the alarm threshold values.

10. Device according to one of claims 1 to 9, **characterised in that** means for measuring the temperature are provided in the inerting chamber.

11. Device according to one of claims 1 to 10 **characterised in that** it comprises means such as a pump making it possible to create a vacuum controlled downstream of the means for measuring the O₂ content, which makes it possible to guarantee that a minimum flow of gas contained in the inerting chamber, flow that is predefined and programmable, is passing through said means for measuring.

12. Device according to one of claims 1 to 11 **characterised in that** it is provided with means for verifying the calibration of the means for measuring the O₂ content, comprising an additional supply of inert gas, the inert gas of this second supply being calibrated in oxygen for example at 5,000 ppm and more preferably enclosed in a bottle exterior to the device and brought to the latter by a conduit connected directly to the means for measuring the O₂ content, and means making it possible to switch from one supply to the other in such a way that, when the inert gas calibrated in O₂ passes for a very short time on the means for measuring, the calibration of the means for measuring can be verified.

13. Device according to one of claims 1 to 12, **characterised in that** it further comprises a system for shedding the gas contained in the inerting chamber is installed, this system being controlled automatically by the measurement of the pressure and/or of the O₂ content, in such a way as to maintain the pressure and/or the O₂ content lower than the required thresholds, this controlled and driven shedding system comprising a valve, a solenoid valve or being able to be provided by an increase in the flow of the auxiliary pump.

14. Method for implementing the device according to one of the preceding claims, wherein once the said device introduced into the two conduits to be welded, has centred and clamped said conduits, an inert gas is distributed on the mating surface between the latter in such a way as to create a protective atmosphere on the other side of the mating surface, **characterised in that** the O₂ content and/or the pressure present in the protective atmosphere is measured in real time, said measurements carried out are compared in relation to a predetermined threshold value of the O₂ content and/or of predetermined pressure, and then in real time the flow and/or the supply pressure of the inert gas to be sent is regulated in such a way as to maintain the O₂ content and/or the pressure below the predetermined alarm threshold.

## Patentansprüche

1. Vorrichtung zum Zentrieren und Klemmbefestigen von Rohren, bevorzugt aus legiertem Stahl, die aneinander gereiht werden, um verschweißt zu werden und um eine Rohrleitung nach Art einer Pipeline zu bilden, insbesondere aufweisend Mittel zum Zentrieren und Klemmbefestigen von zwei zu verschweißenden Rohren, gegebenenfalls Mittel zum dichten Abtrennen, die eine so genannte Inertisierungskammer an der Stoßfläche definieren, und Mittel zum Verteilen eines Inertgases, um eine Schutzatmosphäre an der Stoßfläche zu erstellen,
**dadurch gekennzeichnet, dass** die Mittel zum Verteilen des Inertgases auf der Vorrichtung derart angeordnet sind, dass diese Verteilung direkt auf der Rückseite der Stoßfläche in einem radialen Abstand zur Innenhaut der zu verschweißenden Enden von maximal 30 mm erfolgt, wobei die Verteilungsmittel von der Art eines Rohrs/Spiralrohrs sind, das mit einer Vielzahl von Ablassbohrungen oder -mündungen versehen ist, die es ermöglichen, das Inertgas gleichmäßig in Richtung auf die Stoßfläche zu verbreiten, und dass sie ferner mindestens Mittel zum Regulieren des Durchsatzes des Inertgases und/oder des Versorgungsdrucks dieses Inertgases in Abhängigkeit von dem O₂-Gehalt, der in der Schutzatmosphäre gemessen wird, und/oder von dem Druck, der innerhalb der Atmosphäre an der Stoßfläche gemessen wird, umfasst, um den O₂-Gehalt der Atmosphäre unter einem Vorherbestimmten Alarmschwellenwert zu halten und/oder den Druck der Atmosphäre unter einem Vorherbestimmten Alarmschwellenwert zu halten.

2. Vorrichtung nach Anspruch 1, **dadurch gekennzeichnet, dass** sie Mittel zum Echtzeitmessen des O₂-Gehalts innerhalb der Schutzatmosphäre und Mittel zum Echtzeitverarbeiten der Messungen des O₂-Gehalts umfasst, wobei es die Verarbeitung der Informationen (Messungen) ermöglicht, in Echtzeit die Steueranweisungen der Mittel zum Regulieren des Durchsatzes und/oder des Versorgungsdrucks des Inertgases zu bestimmen, um den O₂-Gehalt unter der Vorherbestimmten Alarmschwelle zu halten.

3. Vorrichtung nach einem der Ansprüche 1 und 2, **dadurch gekennzeichnet, dass** der Alarmschwellenwert des O₂-Gehalts bevorzugt 5000 ppm ist.

4. Vorrichtung nach einem der Ansprüche 1 bis 3, **dadurch gekennzeichnet, dass** er Mittel zum Echtzeitmessen des Drucks, wie etwa einen Drucksensor, der es ermöglicht, den Druck innerhalb der Schutzatmosphäre zu messen, und Mittel zum Echtzeitverarbeiten der Messungen des Drucks umfasst, wobei es die Verarbeitung der Informationen (Messungen) ermöglicht, in Echtzeit die Steueranweisungen der Mittel zum Regulieren des Durchsatzes und/oder des Versorgungsdrucks des Inertgases zu bestimmen, um den Druck unter der Vorherbestimmten Alarmschwelle zu halten.

5. Vorrichtung nach einem der Ansprüche 1 bis 4, **dadurch gekennzeichnet, dass** der Alarmschwellenwert des Drucks bevorzugt bei 12 Millibar liegt.

6. Vorrichtung nach einem der Ansprüche 1 bis 5, **dadurch gekennzeichnet, dass** sie Mittel zum Steuern des Schweißens umfasst, die aktiviert werden, wenn der O₂-Gehalt und/oder der Druck unter den Vorherbestimmten Schwellenwerten zu Beginn eines Zyklus liegt bzw. liegen.

7. Vorrichtung nach einem der Ansprüche 1 bis 6, **dadurch gekennzeichnet, dass** sie Mittel zum Senden einer Abweichungsnachricht an die Steuer- und Regeleinheit der externen Schweißstation, wenn der O₂-Gehalt und/oder der Druck über den Vorherbestimmten Alarmschwellenwerten liegt bzw. liegen und wenn die Überschreitungsdauer der Alarmschwelle kürzer als eine Vorherbestimmte Zeit ist, umfasst.

8. Vorrichtung nach Anspruch 7, **dadurch gekennzeichnet, dass** sie Mittel zum automatischen Anhalten des Schweißens umfasst, die aktiviert werden, wenn die Dauer des Überschreitens der Alarmschwelle die Vorherbestimmte Zeit überschreitet.

9. Vorrichtung nach einem der Ansprüche 1 bis 8, **dadurch gekennzeichnet, dass** sie Mittel zum automatischen Anhalten des Schweißens umfasst, die aktiviert werden, wenn der O₂-Gehalt und/oder der Druck über den Vorherbestimmten Sicherheitsschwellenwerten liegt bzw. liegen, die über den Alarmschwellenwerten liegen.

10. Vorrichtung nach einem der Ansprüche 1 bis 9, **dadurch gekennzeichnet, dass** Mittel zum Messen der Temperatur in der Inertisierungskammer bereitgestellt werden.

11. Vorrichtung nach einem der Ansprüche 1 bis 10, **dadurch gekennzeichnet, dass** sie Mittel umfasst, wie etwa eine Pumpe, die es ermöglichen, einen geregelten Unterdruck unterhalb der Mittel zum Messen des O₂-Gehalts zu erstellen, wodurch es möglich ist zu gewährleisten, dass ein Mindestdurchsatz des in der Inertisierungskammer enthaltenen Gases, wobei der Durchsatz vordefiniert und programmierbar ist, durch die Messmittel geht.

12. Vorrichtung nach einem der Ansprüche 1 bis 11, **dadurch gekennzeichnet, dass** sie mit Mitteln zum Überprüfen der Kalibrierung der Mittel zum Messen des O₂-Gehalts ausgestattet ist, umfassend eine zusätzliche Versorgung mit Inertgas, wobei das Inertgas dieser zweiten Versorgung mit Sauerstoff kalibriert ist, beispielsweise auf 5000 ppm, und bevorzugt in einer Flasche außerhalb der Vorrichtung aufbewahrt und dieser über ein Rohr zugeführt wird, das direkt mit den Mitteln zum Messen des CO₂-Gehalts verbunden ist, und Mittel, die es ermöglichen, von einer Versorgung auf die andere umzuschalten, so dass, wenn die mit O₂ kalibrierte Gasflasche sehr kurzfristig an den Messmitteln vorbeigeht, man die Kalibrierung der Messmittel überprüfen kann.

13. Vorrichtung nach einem der Ansprüche 1 bis 12, **dadurch gekennzeichnet, dass** sie ferner ein System zum Ablassen des Gases, das in der Inertisierungskammer enthalten ist, umfasst, wobei dieses System automatisch durch die Messung des Drucks und/oder des O₂-Gehalts geregelt wird, um den Druck und/oder den O₂-Gehalt unter den benötigten Schwellen zu halten, wobei dieses geregelte und angesteuerte Ablasssystem eine Klappe, ein Magnetventil umfasst oder durch eine Erhöhung des Durchsatzes der Hilfspumpe sichergestellt werden kann.

14. Verfahren zum Einsetzen einer Vorrichtung nach einem der vorhergehenden Ansprüche, wobei, sobald die Vorrichtung, die in zwei zu verschweißende Rohre eingeführt wurde, die Rohre zentriert und befestigt hat, ein Inertgas an der Stoßfläche dazwischen verteilt wird, um eine Schutzatmosphäre an der Rückseite der Stoßfläche zu erstellen, **dadurch gekennzeichnet, dass** innerhalb der Schutzatmosphäre der O₂-Gehalt und/oder der darin herrschende Druck in Echtzeit gemessen wird, die vorgenommenen Messungen im Verhältnis zu einem Schwellenwert des O₂-Gehalts und/oder eines Vorherbestimmten Drucks verglichen wird, und anschließend der Durchsatz und/oder der Versorgungsdruck des zu schickenden Inertgases in Echtzeit reguliert wird, um den O₂-Gehalt und/oder den Druck unter der Vorherbestimmten Alarmschwelle zu halten.
